# EUROPÄISCHE PATENTSCHRIFT

(11) **EP 1 772 935 B1**
(45) Veröffentlichungstag und Bekanntmachung des Hinweises auf die Patenterteilung: **20.06.2012**
(21) Anmeldenummer: 06020545.7
(22) Anmeldetag: 29.09.2006
(51) Int. Cl.: H02G 3/30

(54) **Halter-Anordnung für Kabel o.ä. mit einstellbaren Dreh-Rast-Positionen**
Cable holder arrangement with adjustable positions by rotative indexing
Agencement support de câble à positions ajustables par indexation rotative

(30) Priorität: 07.10.2005 DE 202005015875 U
(43) Veröffentlichungstag der Anmeldung: 11.04.2007
(73) Patentinhaber: S-Fasteners GmbH, 71106 Magstadt (DE)
(72) Erfinder: Homner, Bernhard, 75365 Calw-Stammheim (DE)
(74) Vertreter: Borchert, Uwe Rudolf

(56) Entgegenhaltungen:
- EP-A1- 0 459 904
- US-A- 4 602 760
- US-A- 4 786 025

## Beschreibung

Die Erfindung bezieht sich auf eine Halter-Anordnung für ein Kabel o.ä. mit einstellbaren Dreh-Rastpositionen gemäß der im Oberbegriff des Anspruches 1 angegebenen Art und ein Basisteil für eine Halte-Anordung für Kabel gemäß der im Oberbegriff des Anspruches 14 angegebenen Art.

Bekannte an Wänden zu befestigende Kabel-Halter bestehen üblicherweise aus einem Basisteil zur Aufnahme des Kabels und einen auf das Basisteil aufsetzbaren "Reiter".

Jedoch können solche Halter nicht auf wählbare Drehpositionen ausgerichtet werden.

Für viele Anwendungen ist eine solche Ausrichtbarkeit wünschenswert.

Eine gattungsbildende Halter-Anordnung für Kabel o.ä. ist aus der GB 2 367 695 bekannt. Diese Halter-Anordnung weist ein erstes Basisteil und ein in dieses erste Basisteil einführbares, das Kabel haltendes zweites Teil auf. Das zweite Teil ist gegenüber dem ersten Teil verdrehbar und in einer wählbaren Dreh-Rastposition fixierbar. Das erste und zweite Teil besteht dabei jeweils aus zwei miteinander verbundenen Hälften, welche die Kabel umgreifen. Diese Art von Verbindung ist recht aufwendig und eine Anpassung an unterschiedliche Kabeldurchmesser nicht möglich.

Aus der DE 201 02 935 U1 ist ein Befestigungselement für Kabelbündel bekannt, die mittels eines Schellenbandes zu binden sind. Das Befestigungselement ist mit einem in einer Wandung verankerbaren Fuß versehen. Auf dem Fuß ist ein Kopf mit einer Durchgangsöffnung für ein Schellenband angeordnet. Durch diese Durchgangsöffnung ist das Schellenband/ der Kabelbinder führbar. Nachteilig dabei ist, dass nur bestimmte, geringe Kräfte an das Befestigungselement angreifen dürfen, sonst reist der Fuß aus der Wandung aus.

Aus der US 2004/0150978 A1 ist ebenfalls eine Halter-Anordnung für Kabel bekannt, welche mit U-förmigen Aufnahmen versehen ist. Die U-förmigen Aufnahmen weisen einen in einer Wandung befestigten Fuß auf. Die Aufnahmen sind gegenüber dem Fuß über Rasten verdreh- und fixierbar. In den U-förmigen Aufnahmen sind die Kabel eingelegt, nach oben aber nicht fixiert. Auch hier stellt sich das Problem der geringen Widerstandsfähigkeit gegen angreifende Kräfte. Zudem kann sich die U-förmige Aufnahme vom Fuß lösen.

Aus der DE 101 35 033 A1 ist ein erstes Basisteil vorgehen. Das Basisteil weist eine konkave Vertiefung nach Art einer Rinne auf, in das ein Kabel einbringbar ist. Darüber wird ein Klemmteil angeordnet, welches das Kabel in der Rinne fixiert. Mehre derartige Halter-Anordnungen können übereinander angeordnet werden, wobei zur Ausrichtung der einzelnen Halter-Anordnungen zwischen den einzelnen Halter-Anordnungen eine Verzahnung vorgesehen ist. Diese Art der Befestigung von Kabeln ist sehr aufwendig.

Aus der DE 198 28 073 C1 ist ein Kabelhalter bekannt, der aus einem in eine Wandung einbringbaren Fuß und einer Anlage für das Kabel besteht.

Der Erfindung liegt die Aufgabe zugrunde, eine Halter-Anordnung für Kabel o.ä. gemäß der im Oberbegriff des Anspruches 1 angegebenen Art und ein Basisteil gemäß der im Oberbegriff des Anspruches 14 angegebenen Art derart weiterzubilden, dass unter Vermeidung der genannten Nachteile eine einfach Fixierung und Ausrichtung der Kabel gegenüber der Wandung ermöglicht wird.

Diese Aufgabe wird für die Halter-Anordnung durch die kennzeichnenden Merkmale des Anspruches 1 in Verbindung mit seinen Oberbegriffsmerkmalen gelöst und für das Basisteil durch die kennzeichnenden Merkmale des Anspruches 14 in Verbindung mit seinen Oberbegriffsmerkmalen.

Nach der Erfindung weist die Halter-Anordnung für Kabel o.ä. ein in einer oder auf einer Wandung anzubringendes Basisteil und einen in dieses Basisteil einführbaren, ein Kabel haltenden Steckverbinder auf, welcher im Basisteil verdrehbar und in einer wählbaren Dreh-Rastposition fixierbar ist. Dabei ist das Basisteil mit einer bohrungsähnlichen Aussparung mit einer Öffnung versehen und der Steckverbinder weist mindestens einen in diese Aussparung einführbaren Federarm auf. An der Innen-Wand der Aussparung ist eine öffnungsnahe konzentrische Führungsbahn für ein Führungselement des Federarms ausgebildet und an der Innen-Wand der Aussparung ein öffnungsferner konzentrischer, Rastpositionen definierender Bereich zum wahlweisen Eingriff eines am Federarm angeordneten Rastelementes ausgebildet. Der Steckverbinder ist weiterhin mittels des in der Führungsbahn geführten Führungselementes im Basisteil verdrehbar, wobei gleichzeitig der Federarm beim Verdrehen des Steckverbinders zur Auswahl einer anderen Rastposition federnd auslenkbar ist. Nach Einstellung einer gewünschten Rastposition ist der Federarm in seiner Lage gegen federndes Auslenken verriegelbar.

Insbesondere sind die Rastpositionen im Bereich konzentrisch angeordnet und weisen ein sägezahnförmig-ähnliches Profil auf. Das Rastelement ist dabei am Federarm ringsegmentartig ausgebildet und auf seiner Außenseite mit einem sägezahnförmig-ähnlichem Profil versehen.

Gemäß einer Ausführungsform der Erfindung ist am Federarm ein seine federnde Auslenkung verhinderndes Verriegelungs-Element anordnungsbar.

Das Verriegelungselement wird vorzugsweise durch einen in die bohrungsähnliche Aussparung einführbaren Sicherungsstift gebildet.

Gemäß einer Ausführungsform weist der Steckverbinder einen Durchbruch zur Durchführung einer Schelle, eines Kabelbinders o.ä. auf.

Vorzugsweise ist eine den Durchbruch kreuzende Öffnung zur Betätigung eines Verriegelungselementes vorgesehen.

Insbesondere kann dabei der eingebrachte, durch den Durchbruch verlaufende Kabelbinder für das obere Ende des in die Aussparung eingeführten Verriegelungselementes einen Anschlag bilden.

Der eingebrachte, durch den Durchbruch verlaufende Kabelbinder für das obere Ende des in die Aussparung eingeführten Verriegelungselementes bildet insbesondere einen Anschlag.

Vorzugsweise ist der Steckverbinder mit zwei diametral gegenüberliegend angeordneten Federarmen versehen.

Gemäß einer Ausführungsform der Erfindung wird das Verriegelungselement durch einen Sicherungsstift gebildet, welcher axial in der Aussparung zwischen den Federarmen verschiebbar ist.

Das Basisteil kann aus zwei vorzugsweise identische Teil-Hälften bestehen, wobei die Teilhälften insbesondere über Loch/Zapfen-Verbindungen zusammenfügbar sind.

Gemäß einer weiteren Ausführungsform der Erfindung ist das Basisteils aus Kunststoff, vorzugsweise aus Polyetherimid, und der Steckverbinders aus Polyamid gebildet.

Das Basisteil kann als Einsatz-Teil periphere Aussparungen für eine gedachte verdreh- und verschiebefeste Einbettung mittels eines Klebers in einer gedachten Wandungsöffnung aufweisen.

Gemäß einer Ausführungsform der Erfindung ist das Basisteil für eine Halte-Anordung für Kabel ausgebildet und in einer oder auf einer Wandung anbringbar. In das Basisteil ist ein Steckverbinder verdrehbar und in einer wählbaren Dreh-Rastposition fixierbar, wobei in den Steckverbinder ein Kabel einführbar und von dem Steckverbinder haltbar ist. Dabei weist das Basisteil zwei, vorzugsweise identische, Teil-Hälften auf.

Insbesondere sind die Teilhälften über Loch/Zapfen-Verbindungen zusammenfügbar.

Gemäß einer weiteren Ausführungsform der Erfindung ist das Basisteil aus Kunststoff, beispielsweise aus Polyetherimid, ausgebildet.

Zwei Ausführungsbeispiele der Erfindung sind in den Zeichnungen dargestellt und werden im folgenden näher beschrieben. Es zeigen:
- FIG. 1: eine perspektivische Darstellung der erfindungsgemäßen Halter-Anordnung für Kabel, bestehend aus einem Basisteil und einem Steckverbinder;
- FIG. 2: eine perspektivische Darstellung des HalterAnordnung gemäß FIG. 1 mit in das Basisteil eingeführtem Steckverbinder;
- FIG. 3: eine Teil-Schnittdarstellung für die Schnittebene A-A in FIG.1 zur Darstellung der Rastpositionen im Basisteil;
- FIG. 4: eine Explosions-Darstellung der Teile der erfindungsgemäßen Halter-Anordnung für Kabel;
- FIG. 5: eine perspektivische Darstellung der erfindungsgemäßen Halter-Anordnung mit in das Basisteil eingeführtem Steckverbinder mit noch herausstehendem Sicherungsbolzen ;
- FIG. 6: eine perspektivische Darstellung der erfindungsgemäßen Halter-Anordnung mit in das Basisteil eingeführtem Steckverbinder mit eingedrücktem Sicherungsbolzen ;
- FIG. 7: eine Schnittdarstellung der Halter-Anordnung gemäß der Schnittebene B -B in FIG.6;
- FIG. 8: eine perspektivische Darstellung der erfindungsgemäßen Halter-Anordnung gemäß FIG.6 mit im Steckverbinder eingeführtem Kabelbinder zur Kabelbefestigung.
- FIG. 9: eine Teil-Schnittdarstellung einer Basisteil-Hälfte mit einem Flansch und Positioniernasen;
- FIG. 10A: eine perspektivische Darstellung einer Basissteil-Hälfte mit Rastnasen;
- FIG. 10B: eine perspektivische Darstellung eines Basisteils, welches aus zwei Basisteilhälften gemäß FIG. 10A zusammengesetzt ist.

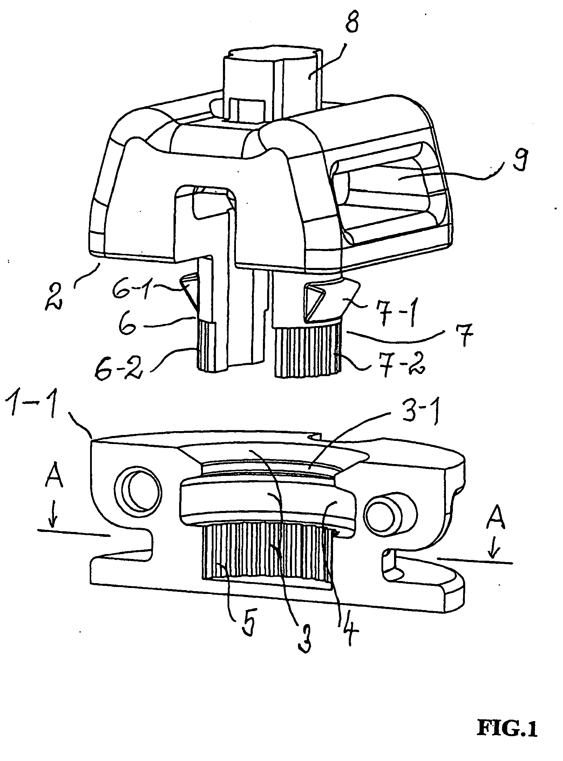

Die Figuren 1 bis 8 beziehen sich auf dasselbe Ausführungsbeispiel; dieselben Teile tragen deshalb in allen Figuren auch dieselben Bezugszeichen.

Figur 1 zeigt eine perspektivische Darstellung der erfindungsgemäßen Halter-Anordnung für Kabel 11, bestehend aus einem Basisteil und einem Steckverbinder 2.

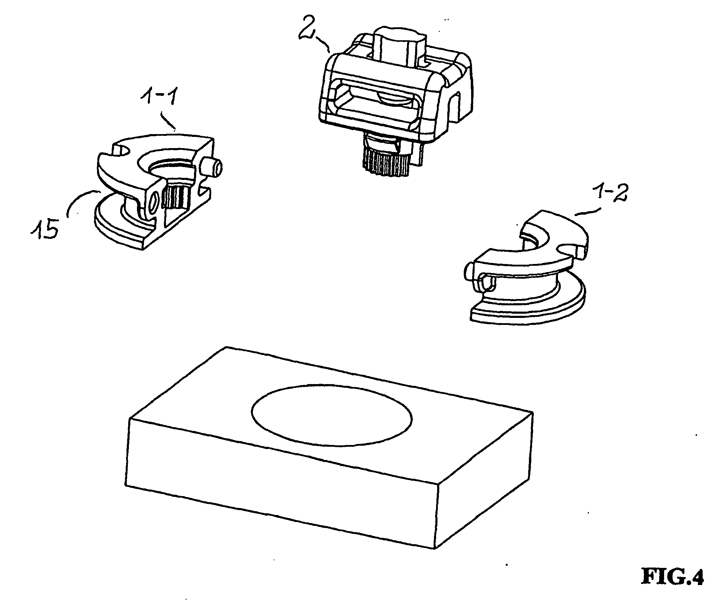

Das Basisteil 1 - siehe Figur 4 - besteht aus zwei identischen Hälften 1-1 und 1-2, welche mittels Loch/Zapfen-Verbindungen zusammenfügbar sind. Aus Übersichts- und Vereinfachungsgründen ist in Figur 1 nur eine 1-1 dieser beiden Hälften gezeigt.

Das Basisteil 1 kann in einer oder auf einer Wandung angebracht werden. In den Figuren ist das Basisteil 1 als Einsatzteil zur Einbettung in eine Wandung ausgeführt - siehe auch Figuren 4 bis 8.

In das Basisteil 1 ist ein Steckverbinder 2 einführbar.

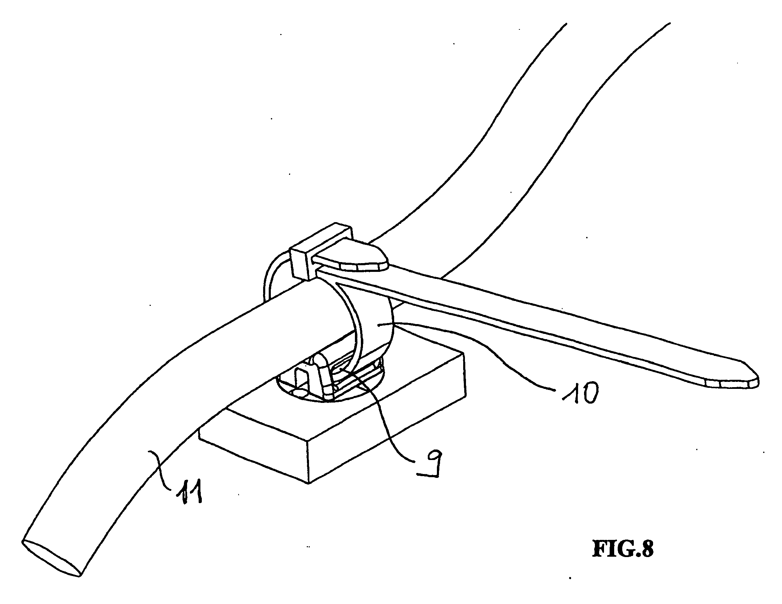

Am oberen Bereich des Steckverbinders 2 erfolgt die Kabelbefestigung, wie aus Figur 8 ausführlicher ersichtlich.

Der Steckverbinder 2 ist im Basisteil 1 zur Einstellung einer wählbaren Dreh-Rastposition verdrehbar. Für die gewünschte Rastposition lässt sich der Steckverbinder 2 im Basisteil 1 fest einstellen, so dass eine weitere Drehung des Steckverbinders 2 nicht möglich ist. Das Basisteil 1 weist eine bohrungsähnliche Aussparung 3 mit einer Öffnung 3-1 zur Aufnahme des unteren Teils des Steckverbinders 2 auf.

Der Steckverbinder 2 weist zwei in diese Aussparung 3 einführbare Federarme 6, 7 auf. Andere Ausführungen mit nur einem oder mit mehr als zwei Federarmen 6, 7 sind denkbar.

Die freien Enden der Federarme 6, 7 können federnd in Richtung des Achse der Aussparung 3 ausweichen.

An der Innen-Wand der Aussparung 3 eine öffnungsnahe konzentrische Führungsbahn 4 für die Führungselemente 6-1, 7-1 der Federarme 6, 7 ausgebildet.

Des Weiteren ist an der Innen-Wand der Aussparung 3 ein öffnungsferner konzentrischer, Rastpositionen definierender Bereich 5 ausgebildet.

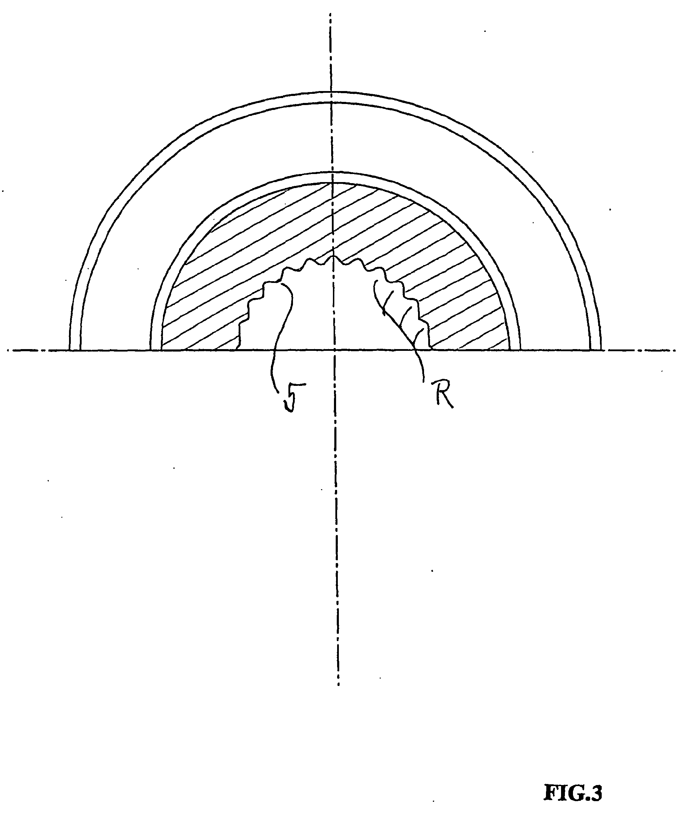

Die Rastpositionen - siehe auch Figur 3 - dienen dem wahlweisen Eingriff der an den Federarmen 6, 7 angeordneten Rastelemente 6-2, 7-2.

Der Steckverbinder 2 ist mittels der in der Führungsbahn 4 geführten Führungselementes 6-1, 6-2 im Basisteil 1 verdrehbar, wobei gleichzeitig die Federarme 6, 7 beim Verdrehen des Steckverbinders 2 im Basisteil 1 zur Auswahl einer anderen Rastposition federnd auslenkbar sind.

Nach Einstellung einer gewünschten Rastposition können die Federarme 6, 7 in ihrer Lage gegen federndes Auslenken durch einen zwischen die Federarme 6, 7 verschiebbaren Sicherungsstift 8 verriegelt werden.

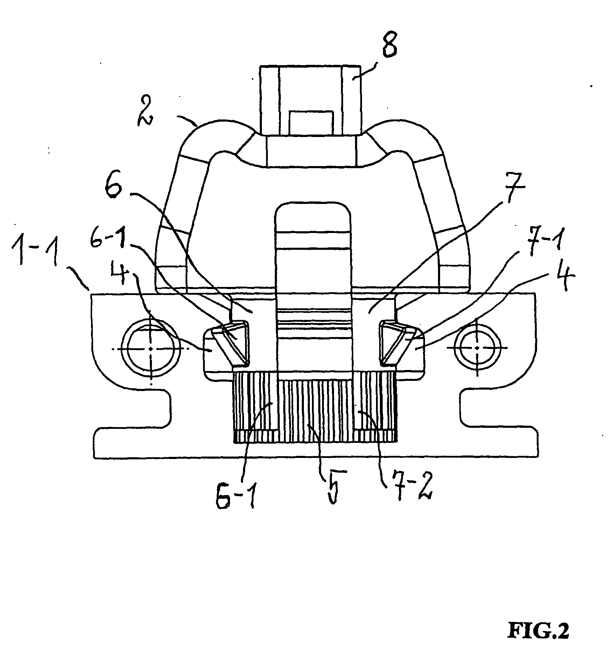

Figur 2 zeigt eine perspektivische Darstellung des Halter-Anordnung gemäß Figur 1 mit in das Basisteil 1 eingeführtem Steckverbinder 2. Vom Basisteil 1 ist aus Übersichtsgründen nur die eine Hälfte 1-2 gezeigt - siehe Figur 4. Aus dieser Darstellung ist erkennbar, dass bei einer Verdrehung des Steckverbinders 2 im Basisteil 1 die Führungselemente 6-1 und 7-1 der Federarme 6 und 7 in der konzentrischen Nut/Führungsbahn 4 geführt sind.

Bei einer solchen Verdrehung verändert sich der Eingriff der Rastelemente 6-1 und 7-1 der Federarme 6 und 7 in den konzentrischen Bereich 5 definierter Rastpositionen. Eine Veränderung ist möglich, weil die Federarme 6, 7 mit den Rastelementen 6-1, 7-1 bei Verdrehung des Steckverbinders 2 federnd in Richtung der gedachten Achse der Aussparung 3 ausweichen können.

Sobald die gewünschte Dreh-Rastposition erreicht ist, werden Federarme 6, 7 in ihrer Lage gegen federndes Auslenken verriegelt. Hierfür dient ein Sicherungsstift 8, welcher axial in die Aussparung zwischen die Enden der Federarme 6, 7 geschoben wird, so dass sich diese nicht mehr aus der gewählten Rastposition lösen können.

Figur 3 zeigt eine Teil-Schnittdarstellung für die Schnittebene A-A in Figur 1 zur Darstellung der im Bereich 5 des Basisteils 1 konzentrisch angeordneten Rastpositionen R. Diese weisen ein sägezahnförmig-ähnliches Profil auf; die Rastelemente 6-2, 7-2 am Federarm 6, 7 sind ringsegmentartig ausgebildet; sie haben auf ihrer Außenseite auch ein entsprechendes sägezahnförmig-ähnliches Profil, um einen beiderseitigen Eingriff der Rastelemente in Rastpositionen im Bereich 5 zu gewährleisten.

Figur 4 zeigt eine Explosions-Darstellung der Teile der erfindungsgemäßen Halter-Anordnung für Kabel 11. Das Basisteil 1 wird von den beiden über Loch/Zapfen-verbindungen zusammenfügbaren Teilhälften 1-1 und 1-2 gebildet. Das Basisteil 1 ist als Einsatz-Teil ausgebildet zum Einsatz in eine entsprechende Öffnung eines Trägers. In dieser Öffnung kann das Basisteil 1 fest mit dem Träger verbunden werden.

Für eine besonders feste Verbindung weist das Basisteil 1 periphere Aussparungen 15 für eine gedachte verdreh- und verschiebefeste Einbettung mittels eines Klebers in der Trägeröffnung auf. Nach Befestigung des Basisteils 1 im Träger wird der Steckverbinder 2 in das Basisteil 1 eingeführt und wie vorausgehend erläutert, eine bestimmte Dreh-Rastposition eingestellt.

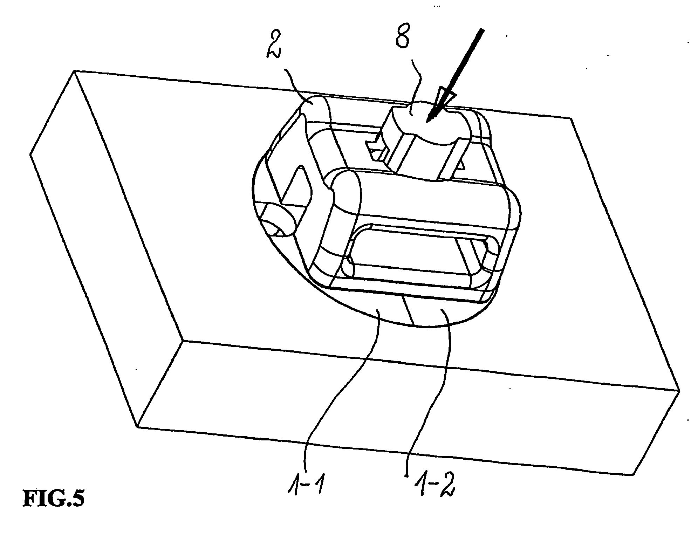

Aus Figur 5 geht hervor, wie die eingestellte gewünschte Dreh-Rastposition durch Betätigung des Sicherungsstiftes 8 fixiert wird. Dieser wird in Pfeilrichtung zwischen die Federarme 6, 7 geschoben, welche bei versuchter Drehung des Steckverbinders 2 im Basisteil 1 nun nicht mehr federnd zur Einstellung einer anderen Rastposition ausweichen können. Durch in Vertikalnuten des Steckverbinders 2 geführte Vorsprünge des Sicherungsstiftes 8 verhindern eine Verdrehung desselben.

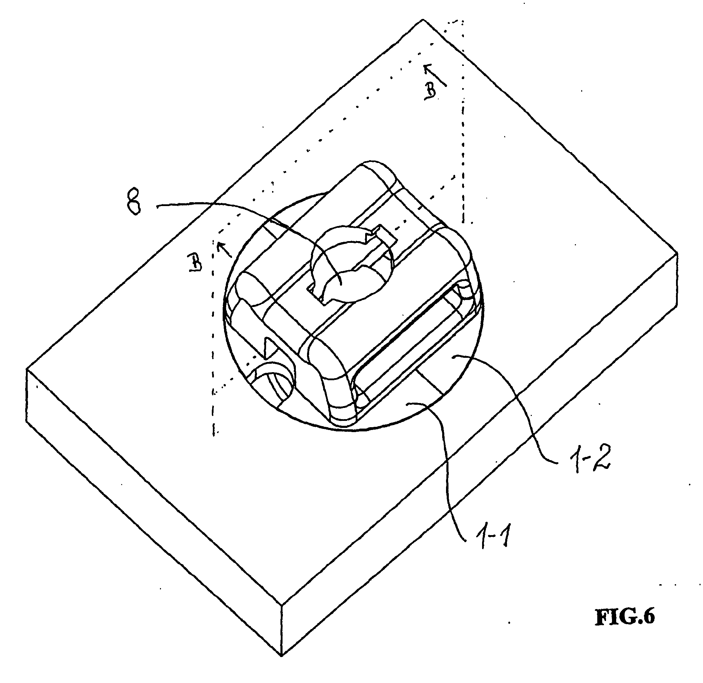

Figur 6 zeigt eine perspektivische Darstellung der erfindungsgemäßen Halter-Anordnung mit in das Basisteil 1 eingeführtem Steckverbinder 2 mit eingedrücktem Sicherungsstift 8.

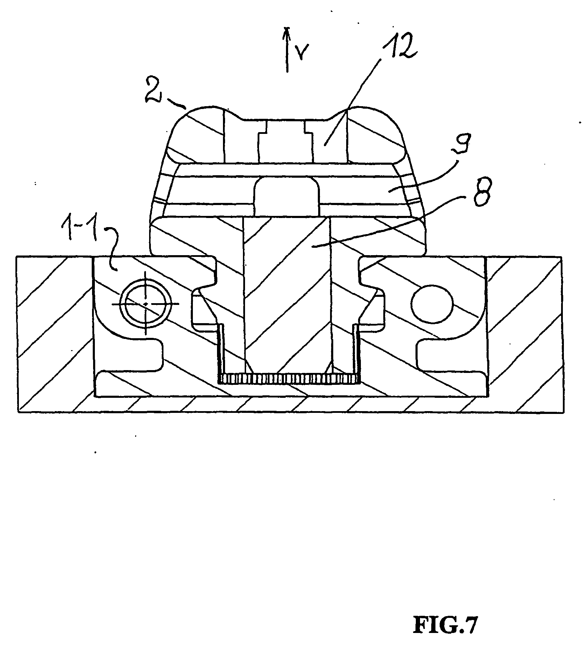

Figur 7 zeigt eine Schnittdarstellung der Halter-Anordnung gemäß der Schnittebene B -B in Figur 6.

Durch den eingedrückten Sicherungsstift 8 wird der Durchbruch 9 zur Durchführung eines Kabelbinders 10 - siehe Figur 8 - freigegeben. Dadurch kann der Kabelbinder 10 durch diesen Durchbruch 9 gefädelt und über dem auf dem Steckverbinder 2 angeordneten Kabel 11 geschlossen werden.

Der im Durchbruch 9 angeordnete Kabelbinder 10 bildet zugleich für den Sicherungsstift 8 einen Anschlag und verhindert, dass sich die Verriegelung der Federarme 6, 7 lösen kann. Denn hierzu wäre eine Verschiebung des Sicherungsstiftes 8 in Richtung V erforderlich. Doch einer solchen Verschiebung steht der einen Anschlag bildende Kabelbinder 10 im Durchbruch 9 entgegen.

Der Steckverbinder 2 weist eine Öffnung 12 zur Betätigung des Sicherungsstiftes 8 auf, welche den Durchbruch 9 kreuzt.

Die Halter-Anordnung ist vorzugsweise aus Kunststoff, insbesondere aus Polyetherimid für das Basisteil 1 und Polyamid für den Steckverbinder 2 hergestellt. Nach Entfernen des Kabelbinders 10 aus dem Durchbruch 9 kann durch Betätigung des Sicherungsstiftes 8 über eine seitliche Aussparung im Steckverbinder 2 die Verriegelung der Federarme 6, 7 wieder gelöst werden.

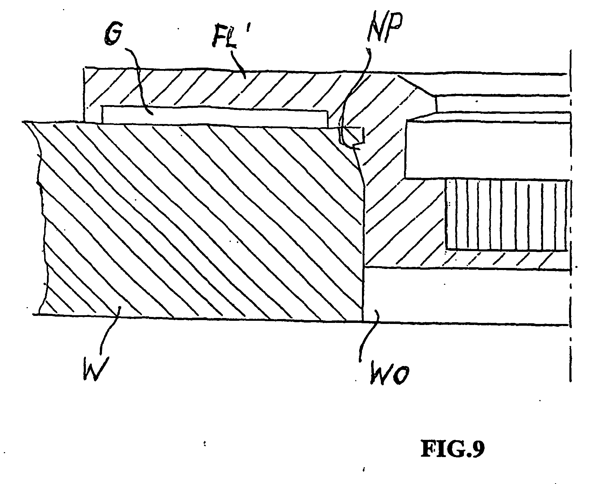

Figur 9 zeigt eine Teil-Schnittdarstellung einer Hälfte 1-1, 1-2 eines Basisteils 1 mit einem Flansch FL' und einer Positioniernase NP.

In einer solchen Ausführungsform weist das Basisteil einen Flansch FL' auf, auf dessen Unterseite es mit der Trägerschicht W verklebt G wird; ein Verkleben des Basisteils in der Öffnung WO der Trägerschicht W kann dadurch entfallen.

Vor dem Verkleben sorgen kleine Positioniernasen NP, welche in die Öffnungswandung eingreifen für eine Fixierung des Basisteils.

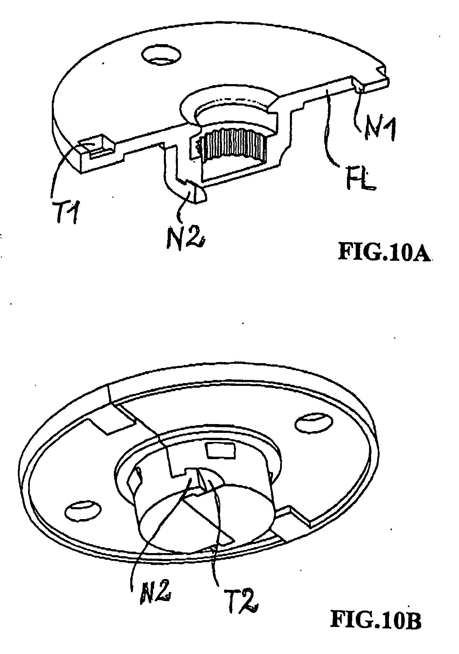

Figur 10A zeigt eine perspektivische Darstellung einer Hälfte des Basisteils mit Rastnasen N1 und N2, während in Figur 10B ein Basisteil 1 perspektivisch dargestellt ist, welches aus zwei vorzugsweise identischen Hälften eines Basisteils 1 gemäß Figur 10A zusammengesetzt ist. Im zusammengefügten Zustand beider Basisteil-Hälften hakt die Rastnase N1 bzw. N2 der einen Basisteil-Hälfte in eine entsprechende Aussparung T1 bzw. T2 der anderen Basisteil-Hälfte ein. Dadurch werden beide Hälften verdreh- und verschiebefest zusammengehalten. Dies ist besonders dann vorteilhaft, wenn die Befestigung des Basisteils "nur" durch Verkleben des Flansches FL mit dem Träger - nicht dargestellt - erfolgt.

### BEZUGSZEICHENLISTE

- 1: Basisteil
- 1-1: eine Hälfte
- 1-2: andere Hälfte
- 2: Steckverbinder
- 3: Aussparung
- 4: Führungsbahn, Nut
- 5: konzentrischer Bereich
- 6: Federarm
- 6-1: Führungsarm
- 6-2: Rastelement
- 7: Federarm
- 7-1: Führungsarm
- 7-2: Rastelement
- 8: Sicherungsstift
- 9: Durchbruch
- 10: Kabelbinder
- 11: Kabel
- 12: Öffnung
- 15: Aussparung
- V: Verschieberichtung
- FL': Flansch
- NP: Positioniernase
- W: Trägerschicht
- G: Kleber
- N1: Rastnase
- N2: Rastnase
- WO: Öffnung
- T1: Aussparung
- T2: Aussparung

## Patentansprüche

1. Halter-Anordnung für Kabel (11) o.ä., mit einem in einer oder auf einer Wandung anzubringenden Basisteil (1) und einem in dieses Basisteil (1) einführbaren, ein Kabel (11) haltenden Steckverbinder (2), welcher im Basisteil (1) verdrehbar und in einer wählbaren Dreh-Rastposition fixierbar ist, **dadurch gekennzeichnet, dass** das Basisteil (1) eine bohrungsähnliche Aussparung (3) mit einer Öffnung (3-1) und der Steckverbinder (2) mindestens einen in diese Aussparung (3) einführbaren Federarm (6, 7) aufweist, dass an der Innen-Wand der Aussparung (3) eine öffnungsnahe konzentrische Führungsbahn (4) für ein Führungselement (6-1, 7-1) des Federarms (6, 7) ausgebildet ist, dass an der Innen-Wand der Aussparung (3) ein öffnungsferner konzentrischer, Rastpositionen definierender Bereich (5) ausgebildet ist zum wahlweisen Eingriff eines am Federarm (6, 7) angeordneten Rastelementes (6-2, 7-2), dass der Steckverbinder (2) mittels des in der Führungsbahn (4) geführten Führungselementes (6-1, 6-2) im Basisteil (1) verdrehbar ist, wobei gleichzeitig der Federarm (6, 7) beim Verdrehen des Steckverbinders (2) zur Auswahl einer anderen Rastposition federnd auslenkbar ist, und dass nach Einstellung einer gewünschten Rastposition der Federarm (6, 7) in seiner Lage gegen federndes Auslenken verriegelbar ist.

2. Halter-Anordnung nach Anspruch 1, **dadurch gekennzeichnet, dass** die Rastpositionen im Bereich (5) konzentrisch angeordnet sind und ein sägezahnförmig-ähnliches Profil aufweisen und dass das Rastelement (6-2, 7-2) am Federarm (6, 7) ringsegmentartig ausgebildet ist und auf seiner Außenseite ein sägezahnförmig-ähnliches Profil aufweist.

3. Halter-Anordnung nach einem der vorangehenden Ansprüche, **dadurch gekennzeichnet, dass** am Federarm (6,7) ein seine federnde Auslenkung verhinderndes Verriegelungs-Element (8) anordnungsbar ist.

4. Halter-Anordnung nach einem der vorangehenden Ansprüche, **dadurch gekennzeichnet, dass** das Verriegelungselement ein in die bohrungsähnliche Aussparung (3) einführbarer Sicherungsstift (8) ist.

5. Halter-Anordnung nach einem der vorangehenden Ansprüche, **dadurch gekennzeichnet, dass** der Steckverbinder (2) einen Durchbruch (9) zur Durchführung einer Schelle, eines Kabelbinders (10) o.ä. aufweist.

6. Halter-Anordnung nach Anspruch 5, **dadurch gekennzeichnet, dass** eine den Durchbruch (9) kreuzende Öffnung (12) zur Betätigung eines Verriegelungselementes (8) vorgesehen ist.

7. Halter-Anordnung nach Anspruch 5 oder 6, **dadurch gekennzeichnet, dass** der eingebrachte, durch den Durchbruch (9) verlaufende Kabelbinder (10) für das obere Ende des in die Aussparung (3) eingeführten Verriegelungselementes (8) einen Anschlag bildet.

8. Halter-Anordnung nach einem der vorangehenden Ansprüche, **dadurch gekennzeichnet, dass** der Steckverbinder (2) zwei diametral gegenüberliegend angeordnete Federarme (6, 7) aufweist.

9. Halter-Anordnung nach einem der vorangehenden Ansprüche, **dadurch gekennzeichnet, dass** das Verriegelungselement ein Sicherungsstift (8), welcher axial in der Aussparung (3) zwischen den Federarmen (6, 7) verschiebbar ist.

10. Halter-Anordnung nach einem der vorangehenden Ansprüche, **dadurch gekennzeichnet, dass** das Basisteil (1) zwei vorzugsweise identische Teil-Hälften (1-1 und 1-2) umfasst.

11. Halter-Anordnung nach Anspruch 10, **dadurch gekennzeichnet, dass** die Teilhälften über Loch/Zapfen-Verbindungen zusammenfügbar sind.

12. Halter-Anordnung nach einem der vorangehenden Ansprüche, **gekennzeichnet durch** eine Ausbildung des Basisteils (1) aus Kunststoff, vorzugsweise aus Polyetherimid und **durch** eine Ausbildung des Steckverbinders (2) aus Polyamid.

13. Halter-Anordnung nach einem der vorangehenden Ansprüche, **dadurch gekennzeichnet, dass** das Basisteil (1) als Einsatz-Teil periphere Aussparungen (15) für eine gedachte verdreh- und verschiebefeste Einbettung mittels eines Klebers in einer gedachten Wandungsöffnung aufweist.

14. Basisteil (1) für eine Halte-Anordung nach einem der vorangehenden Ansprüche **gekennzeichnet durch** zwei, vorzugsweise identische, Teil-Hälften (1-1 und 1-2).

15. Basisteil nach Anspruch 14, **dadurch gekennzeichnet, dass** die Teilhälften über Loch/Zapfen-Verbindungen zusammenfügbar sind.

16. Basisteil nach Anspruche 15, **gekennzeichnet durch** eine Ausbildung aus Kunststoff, vorzugsweise aus Polyetherimid.

## Claims

1. A holder arrangement for cables (11) and the like including a base part (1) that can be mounted in or on a wall and a plug connector (2) that can be inserted into this base part (1) and holds a cable (11), which plug connector (2) can be twisted within said base part (1) and fastened in a selectable twist-lock position **characterized in that** said base part (1) has a bore like recess (3) with an opening (3-1) and said plug connector (2) has at least one spring arm (6, 7) that can be inserted in said recess (3), that formed on the inner wall of said recess (3), close to said opening, is a concentric guideway (4) for a guide element (6-1, 7-1) of said spring arm (6, 7), that formed on the inner wall of said recess (3), remote from said opening, is a concentric area (5) that defines latching positions for optionally engaging a latching element (6-2, 7-2) provided on said spring arm (6, 7), that said plug connector (2) can be twisted within said base part (1) by means of said guide element (6-1, 7-1) guided within said guideway (4), which spring arm (6, 7) can be resiliently deflected at the same time the plug connector (2) is being twisted in order to thus select a different latching position, and that after setting a desired latching position, said spring arm (6, 7) can be locked in its position to prevent it from being resiliently deflected.

2. The holder arrangement according to claim 1 **characterized in that** the latching positions in the region (5) are disposed concentrically and have a saw tooth-like profile and that the latching element (6-2, 7-2) is formed on the spring arm (6, 7) in the manner of a ring segment and has a saw tooth-like profile on its external side.

3. The holder arrangement of one of the preceding claims **characterized in that** a locking element (8) can be provided on the spring arm (6, 7) to prevent it from being resiliently deflected.

4. The holder arrangement of one of the preceding claims **characterized in that** said locking element is a safety pin (8) that can be inserted in the bore-like recess (3).

5. The holder arrangement of one of the preceding claims **characterized in that** the plug connector (2) includes an aperture (9) through which a clamp, a cable connector (10) and the like can be inserted.

6. The holder arrangement of claim 5 **characterized in that** an opening (12) which crosses said aperture (9) is provided for actuating a locking element (8).

7. The holder arrangement of claim 5 or 6 **characterized in that** the introduced cable connector (10) extending through said aperture (9) constitutes a stop for the upper end of said locking element (8) which has been inserted in said recess (3).

8. The holder arrangement of one of the preceding claims **characterized in that** said plug connector (2) has two spring arms (6, 7) that are diametrically disposed opposite each other.

9. The holder arrangement of one of the preceding claims **characterized in that** said locking element is a safety pin (8) which can be displaced axially within said recess (3) between said spring arms (6, 7).

10. The holder arrangement of one of the preceding claims **characterized in that** said base part (1) comprises two preferably identical part halves (1-1 and 1-2).

11. The holder arrangement of claim 10 **characterized in that** said part halves can be joined together by means of mortise and tenon connections.

12. The holder arrangement of one of the preceding claims **characterized in that** said base part (1) is made of plastic, preferably polyetherimide, and said plug connector (2) is made of polyamide.

13. The holder arrangement of one of the preceding claims **characterized in that** said base part (1), when used as an insert, includes peripheral recesses (15) for embedding it in an intended wall opening in an intended twist- and slide-resistant way by means of glue.

14. A base part (1) for a holder arrangement of one of the preceding claims **characterized by** two preferably identical part halves (1-1 and 1-2).

15. The base part of claim 14 **characterized in that** said part halves can be joined together by means of mortise and tenon connections.

16. The base part of claim 15 **characterized in that** it is made of plastic, preferably polyetherimide.

## Revendications

1. Agencement support de câble (11) et autres choses semblables, avec une partie de la base (1) à mettre en place dans une ou sur une paroi et un connecteur (2) maintenant un câble (11) pouvant être introduit dans une partie de la base (1), lequel peut être tourné dans la partie de la base (1) et peut être fixé dans une position d'encliquetage en rotation sélectionnable, **caractérisé en ce que** la partie de la base (1) comporte un évidement en forme de trou (3) avec une ouverture (3-1) et le connecteur (2) comporte au moins un bras de ressort insérable dans cet évidement (6,7), **en ce que** sur la paroi intérieure de l'évidement (3), un rail de guidage (4) concentrique, destiné à recevoir l'élément de guidage (6-1) du bras de ressort (6, 7), est façonné proche de l'ouverture, **en ce que** sur la paroi intérieure de l' évidement (3), une zone concentrique définissant les positions d'encliquetage, est façonnée proche de l'ouverture (5) pour l'engrènement sélectif d'un élément d'encliquetage (6-2, 7-2) disposé sur le bras de ressort (6,7), **en ce que** le connecteur (2) puisse être tourné dans la partie de la base (1) au moyen de l'élément de guidage (6-1, 7-1) guidé dans le rail de guidage (4), le bras de ressort (6, 7) pouvant simultanément être dévié élastiquement lors de la rotation du connecteur (2) pour sélectionner une autre position d'encliquetage, et **en ce qu'**après avoir réglé une position d'encliquetage souhaitée, le bras de ressort (6, 7) puisse être verrouillé dans sa position contre une déformation élastique.

2. Agencement-support selon revendication 1, **caractérisé en ce que** les positions d'encliquetage sont disposées de façon concentrique dans la zone (5) et présentent un profil en dents de scie et **en ce que** l'élément d'encliquetage (6-2, 7-2) sur le bras de ressort (6, 7) est formé d'anneaux en forme de segments annulaires et présente un profil en dents de scie sur sa face extérieure.

3. Agencement support selon l'une des revendications précédentes, **caractérisé en ce qu'**un élément de verrouillage (8) empêchant sa déviation élastique puisse être disposé sur le bras de ressort (6, 7).

4. Agencement support selon l'une des revendications précédentes, **caractérisé en ce que** l'élément de verrouillage est une broche de verrouillage (8) qui peut être introduite dans l'évidement en forme de trou (3).

5. Agencement support selon l'une des revendications précédentes, **caractérisé en ce que** le connecteur (2) présente une percée (9) pour passer un collier, un collier de serrage (10) et autre choses semblables.

6. Agencement support selon revendication 5, **caractérisé en ce qu'**une ouverture (12) traversant la percée (9) est prévue pour actionner un élément de verrouillage.

7. Agencement support selon revendication 5 ou 6, **caractérisé en ce que** le collier de serrage (10) introduit et passant par la percée (9), forme une butée pour l'extrémité supérieure de l'élément de verrouillage (8) introduit dans l'évidement (3).

8. Agencement support selon l'une des revendications précédentes, **caractérisé en ce que** le connecteur (2) présente deux bras de ressort (6, 7) diamétralement opposés.

9. Agencement support selon l'une des revendications précédentes, **caractérisé en ce que** l'élément de verrouillage est une broche de verrouillage (8) qui est peut coulisser axialement dans l'évidement (3) entre les bras de ressort (6, 7).

10. Agencement support selon l'une des revendications précédentes, **caractérisé en ce que** la partie de la base (1) comprend deux moitiés (1-1 et 1-2) de préférence identiques.

11. Agencement support selon revendication 10, **caractérisée en ce que** les moitiés puissent être liées ensemble via des assemblages à mortaise et tenon.

12. Agencement support selon l'une des revendications précédentes, **caractérisé par** une formation de la partie de la base (1) en plastique, de préférence en polyéthérimide et par une formation du connecteur (2) en polyamide.

13. Agencement support selon l'une des revendications précédentes, **caractérisé en ce que** la partie de la base (1) présente des évidements périphériques (15) comme partie de remplacement pour un encastrement imaginaire fixe à la torsion et au déplacement au moyen d'un adhésif dans une ouverture de paroi imaginaire.

14. Partie de la base (1) pour un agencement support selon l'une des revendications précédentes **caractérisé par** deux moitiés de préférence identiques (1-1 et 1-2).

15. Partie de la base selon revendication 14, **caractérisé en ce que** les moitiés peuvent être assemblées par des assemblages à mortaise et tenon.

16. Partie de la base selon revendication 15, **caractérisée par** une formation en plastique, de préférence en polyéthérimide.
